# DEMANDE DE BREVET EUROPEEN

(11) **EP 2 254 213 A2**
(43) Date de publication de la demande: **24.11.2010**
(21) Numéro de dépôt: 10305540.6
(22) Date de dépôt: 20.05.2010
(51) Int. Cl.: H02G 3/30, F16B 37/04

(54) **Goulotte destinée à recevoir des fils et/ou câbles électriques**

(30) Priorité: 20.05.2009 FR 0902480
(71) Demandeur: OCTE, 28170 Chateauneuf en Thymerais (FR)
(72) Inventeur: Bregere, Yann, 28700 Umpeau (FR)
(74) Mandataire: Laget, Jean-Loup

(57) **Abrégé**

Goulotte (1) destinée à recevoir des fils et/ou câbles électriques, comportant un corps de goulotte (2) présentant une forme de gouttière, le fond (3) dudit corps de goulotte (2) comportant au moins un orifice (5), caractérisée en ce qu'elle comporte au moins une pièce de fixation (6) montée sur ledit fond (3) au niveau dudit au moins un orifice (5), ladite au moins une pièce de fixation (6) comportant un renfoncement (7) apte à recevoir un écrou, ladite au moins une pièce de fixation (6) comportant, au fond dudit renfoncement (7), un trou central (8) permettant le passage d'une cheville à frapper ou d'une vis, les dimensions de ladite au moins une pièce de fixation (6) permettant de lui faire effectuer un tour complet dans ledit corps de goulotte (2) autour d'un axe, perpendiculaire audit fond (3), passant par ledit trou central (8).

## Description

La présente invention a pour objet une goulotte destinée à recevoir des fils et/ou câbles électriques.

Le but d'une goulotte est de protéger les fils et/ou câbles électriques. Des goulottes sont notamment utilisées dans les ascenseurs.

Une goulotte doit pouvoir être fixée sur différents types de supports, notamment sur un grillage ou sur un mur. Pour une fixation sur un grillage, on utilise généralement un système vis-écrou, et il est très difficile pour un installateur de maintenir une clé ou un tournevis d'un côté et de tenir l'écrou de l'autre. En conséquence, deux personnes sont souvent nécessaires pour fixer la goulotte.

Le document EP-1 099 864 décrit une goulotte dont le fond comporte au moins un orifice destiné à recevoir une pièce de fixation présentant elle-même un trou central permettant le passage d'une cheville à frapper ou d'une vis, les dimensions de la pièce de fixation permettant de lui faire effectuer un tour complet dans le corps de goulotte autour d'un axe passant par le trou.

La présente invention a pour but de proposer une goulotte destinée à recevoir des fils et/ou câbles électriques, qui évite au moins certains des inconvénients précités, et qui puisse être fixée sur un support par une seule personne.

A cet effet, l'invention a pour objet une goulotte destinée à recevoir des fils et/ou câbles électriques, comportant un corps de goulotte présentant une forme de gouttière, le fond dudit corps de goulotte comportant au moins un orifice, ladite goulotte comportant au moins une pièce de fixation montée sur ledit fond au niveau dudit au moins un orifice, ladite au moins une pièce de fixation comportant un renfoncement apte à recevoir un écrou, ladite au moins une pièce de fixation comportant, au fond dudit renfoncement, un trou central permettant le passage d'une cheville à frapper ou d'une vis, les dimensions de ladite au moins une pièce de fixation permettant de lui faire effectuer un tour complet dans ledit corps de goulotte autour d'un axe, perpendiculaire audit fond, passant par ledit trou central, **caractérisée en ce que** ledit au moins un orifice est de forme oblongue, ladite au moins une pièce de fixation comportant deux languettes, disposées sur la périphérie dudit trou central, du côté opposé audit renfoncement.

Avantageusement, ledit fond comporte plusieurs orifices, ladite au moins une pièce de fixation étant montée sur ledit fond au niveau d'un desdits orifices.

De préférence, ladite au moins une pièce de fixation comporte des moyens de maintien d'un collier de serrage.

Avantageusement, ladite au moins une pièce de fixation comporte un anneau de préhension permettant sa prise en main et sa manipulation.

L'invention a également pour objet une pièce de fixation, **caractérisée en ce qu**'elle est apte à être fixée sur un corps de goulotte, ladite pièce de fixation comportant un renfoncement apte à recevoir un écrou, ladite pièce de fixation comportant, au fond dudit renfoncement, un trou central permettant le passage d'une cheville à frapper ou d'une vis, les dimensions de ladite pièce de fixation permettant de lui faire effectuer un tour complet dans ledit corps de goulotte autour d'un axe, perpendiculaire audit fond du corps de goulotte, passant par ledit trou central, ladite pièce de fixation comportant deux languettes, disposées sur la périphérie dudit trou central, du côté opposé audit renforcement. L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique, simplifiée, en perspective d'une goulotte selon un mode de réalisation de l'invention ;
- la figure 2 est une vue schématique, simplifiée, en perspective de dessous de la goulotte de la figure 1 ;
- la figure 3 est une vue schématique, simplifiée, en perspective d'une pièce de fixation de la goulotte de la figure 1 ; et
- la figure 4 est une vue schématique, simplifiée, en perspective de profil de la pièce de fixation de la figure 3.

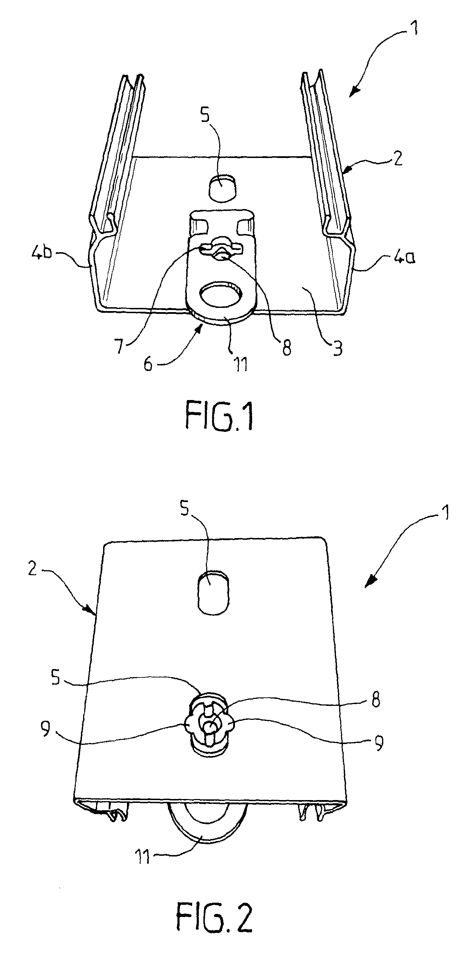

En se référant aux figures 1 et 2, on voit une goulotte 1, qui est par exemple destinée à être disposée dans un ascenseur (non représenté) pour recevoir les fils et/ou câbles électriques de commande de l'ascenseur.

La goulotte 1 comporte un corps de goulotte 2 présentant une forme de gouttière. La longueur du corps 2 est par exemple d'environ 1,5m. Le corps de goulotte 2 comporte un fond 3 de forme rectangulaire, et deux parois latérales 4a et 4b s'étendant respectivement depuis les deux grands côtés du fond 3, dans des plans sensiblement orthogonaux au plan du fond.

Le fond 3 comporte un ou plusieurs orifices 5 pour permettre la fixation de la goulotte 1 sur un support (non représenté), par exemple un mur ou un grillage. Dans l'exemple représenté, le fond 3 comporte deux orifices 5 de forme oblongue.

La goulotte 1 comporte une pièce de fixation 6, permettant de faciliter la fixation de la goulotte 1 sur le support. En variante, la goulotte 1 comporte plusieurs pièces de fixation similaires à la pièce de fixation 6.

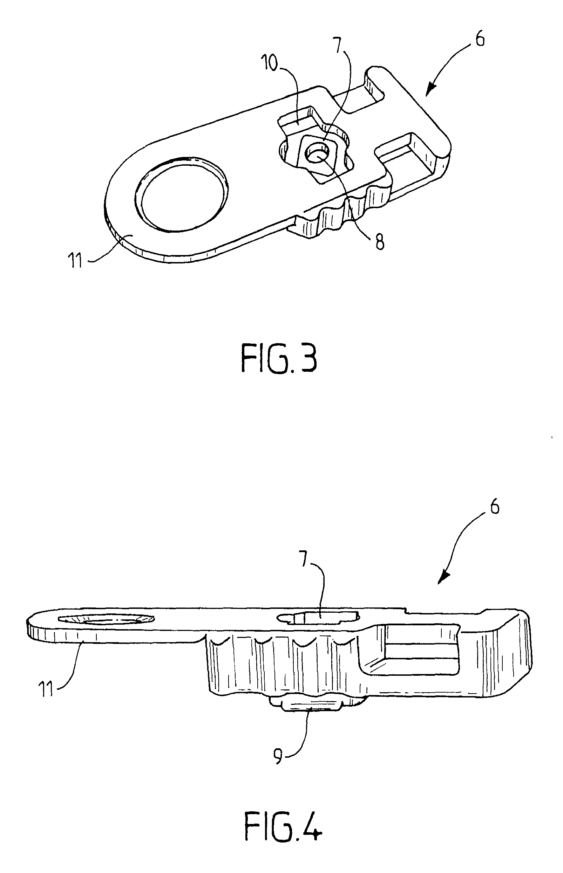

En se référant aux figures 3 et 4, la pièce de fixation 6 comporte un renfoncement 7 apte à recevoir un écrou (non représenté). La pièce de fixation 6 comporte, au fond du renfoncement 7, un trou central 8 permettant le passage d'une cheville à frapper ou d'une vis (non représentées).

La pièce de fixation 6 comporte deux languettes 9, en forme d'arc de cercle ou de forme rectangulaire, disposées sur la périphérie du trou 8, du côté opposé au renfoncement 7. Les languettes 9 permettent d'empêcher que la pièce de fixation 6 soit arrachée du corps de goulotte 2 après sa mise en place, comme cela sera décrit en détails plus loin.

Sous les languettes 9, la pièce de fixation 6 possède deux méplats 12 qui facilitent son positionnement et évitent qu'elle ne tourne lorsque le collier de serrage est mis en place.

La pièce de fixation 6 comporte des moyens de maintien d'un collier de serrage (non représenté). Dans l'exemple représenté, les moyens de maintien comprennent une fente 10, permettant le passage du collier de serrage. Le collier de serrage permet de maintenir les fils et/ou câbles électriques les uns contre les autres. Le passage du collier de serrage dans la fente 10 permet en outre de maintenir le faisceau de fils et/ou câbles électriques dans le corps de goulotte 2.

La pièce de fixation 6 comporte en outre un anneau de préhension 11 pour faciliter sa prise en main et sa manipulation.

On va maintenant décrire le fonctionnement de la goulotte 1, en partant d'un état dans lequel la pièce de fixation 6 n'est pas encore montée sur le corps de goulotte 2.

Pour monter la pièce de fixation 6 sur le corps de goulotte 2, l'installateur place la pièce de fixation 6 contre le fond 3 du corps de goulotte 2, dans une position angulaire permettant l'insertion des languettes 9 dans un des orifices 5. Cela est possible du fait de la forme oblongue des orifices 5.

En partant de cette position, l'installateur tourne la pièce de fixation 6 d'un quart de tour, ce qui a pour effet que les languettes 9 viennent s'engager sur le bord de l'orifice 5 (figure 2), ce qui assure le maintien de la pièce de fixation 6 sur le corps de goulotte 2. On notera que les dimensions de la pièce de fixation 6 permettent de lui faire effectuer un tour complet dans le corps de goulotte 2 autour d'un axe, perpendiculaire au fond 3, passant par le trou 8.

L'installateur fixe ensuite la goulotte 1 sur le support. Lorsque le support est un grillage, l'installateur place un écrou dans le renfoncement 7 et insère une vis dans le trou 8 par le côté opposé. La vis est par exemple une vis en forme de « T ». Cette forme permet que la vis ne se mette pas à tourner lorsque l'on visse la pièce de fixation 6. En variante, la vis peut être de forme quelconque, et comporter des ergots ou autre moyen permettant d'empêcher sa rotation. Le serrage peut être obtenu en faisant tourner la pièce de fixation 6 par rapport au corps de goulotte 2 un nombre de tours adapté. Lorsque le support est un mur, l'installateur insère une cheville à frapper dans le trou 8.

L'installateur peut ensuite glisser un collier de serrage dans la fente 10, afin de maintenir les fils et/ou câbles électriques.

Un installateur seul peut ainsi fixer facilement la goulotte 1 sur les différents supports, en particulier sur un grillage.

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

**1.** Goulotte (1) destinée à recevoir des fils et/ou câbles électriques, comportant un corps de goulotte (2) présentant une forme de gouttière, le fond (3) dudit corps de goulotte (2) comportant au moins un orifice (5), ladite goulotte (1) comportant au moins une pièce de fixation (6) montée sur ledit fond (3) au niveau dudit au moins un orifice (5), ladite au moins une pièce de fixation (6) comportant un renfoncement (7) apte à recevoir un écrou, ladite au moins une pièce de fixation (6) comportant, au fond dudit renfoncement (7), un trou central (8) permettant le passage d'une cheville à frapper ou d'une vis, les dimensions de ladite au moins une pièce de fixation (6) permettant de lui faire effectuer un tour complet dans ledit corps de goulotte (2) autour d'un axe, perpendiculaire audit fond (3), passant par ledit trou central (8), **caractérisée en ce que** ledit au moins un orifice (5) est de forme oblongue, ladite au moins une pièce de fixation (6) comportant deux languettes (9), disposées sur la périphérie dudit trou central (8), du côté opposé audit renfoncement (7).

**2.** Goulotte (1) selon la revendication 1, **caractérisée en ce que** ledit fond (3) comporte plusieurs orifices (5), ladite au moins une pièce de fixation (6) étant montée sur ledit fond (3) au niveau d'un desdits orifices (5).

**3.** Goulotte (1) selon la revendication 1, **caractérisée en ce que** ladite au moins une pièce de fixation (6) comporte des moyens de maintien (10) d'un collier de serrage.

**4.** Goulotte (1) selon la revendication 1, **caractérisée en ce que** ladite au moins une pièce de fixation (6) comporte un anneau de préhension (11) permettant sa prise en main et sa manipulation.

**5.** Pièce de fixation, **caractérisée en ce qu'**elle est apte à être fixée sur un corps de goulotte (2) selon la revendication 1, ladite pièce de fixation (6) comportant un renfoncement (7) apte à recevoir un écrou, ladite pièce de fixation (6) comportant, au fond dudit renfoncement (7), un trou central (8) permettant le passage d'une cheville à frapper ou d'une vis, les dimensions de ladite pièce de fixation (6) permettant de lui faire effectuer un tour complet dans ledit corps de goulotte (2) autour d'un axe, perpendiculaire audit fond (3) du corps de goulotte (2), passant par ledit trou central (8), ladite pièce de fixation (6) comportant deux languettes (9), disposées sur la périphérie dudit trou central (8), du côté opposé audit renfoncement (7).
